# EUROPEAN PATENT APPLICATION

(11) **EP 1 995 694 A2**
(43) Date of publication of application: **26.11.2008**
(21) Application number: 08156848.7
(22) Date of filing: 23.05.2008
(51) Int. Cl.: G06T 15/10

(54) **Mixed reality presentation apparatus and control method**

(30) Priority: 23.05.2007 JP 2007137014
(71) Applicant: Canon Kabushiki Kaisha, Tokyo 146-8501 (JP)
(72) Inventor: Morita, Kenji, c/o Canon Kabushiki Kaisha, Tokyo (JP); Shimoyama, Tomohiko, c/o Canon Kabushiki Kaisha, Tokyo (JP)
(74) Representative: Sharp, Alan Cooper

(57) **Abstract**

Position and orientation information indicating the relative position and orientation relationship between the viewpoint of the observer and a physical space object on a physical space is acquired. A virtual space image is generated based on the acquired position and orientation information, and is rendered on a memory. A physical space image of the physical space object is acquired. By rendering the acquired physical space image on the memory on which the virtual space image has already been rendered, the physical space image and the virtual space image are combined. The obtained composite image is output.

## Description

### BACKGROUND OF THE INVENTION

### Field of the Invention

The present invention relates to a mixed reality presentation apparatus for compositing and presenting a physical space image and virtual space image together, and a control method thereof.

### Description of the Related Art

In a mixed reality system, the viewpoint and line-of-sight direction of an operator, and the position of an object in a space need to be measured.

As a position and orientation measurement system, the use of a position and orientation measurement apparatus known as FASTRAK (trade name) available from Polhemus, U.S.A. is a general method. Also, a method in which only the orientation is measured by a measuring device such as a gyro or the like, and position information and drift errors of the orientation are measured from an image, is known.

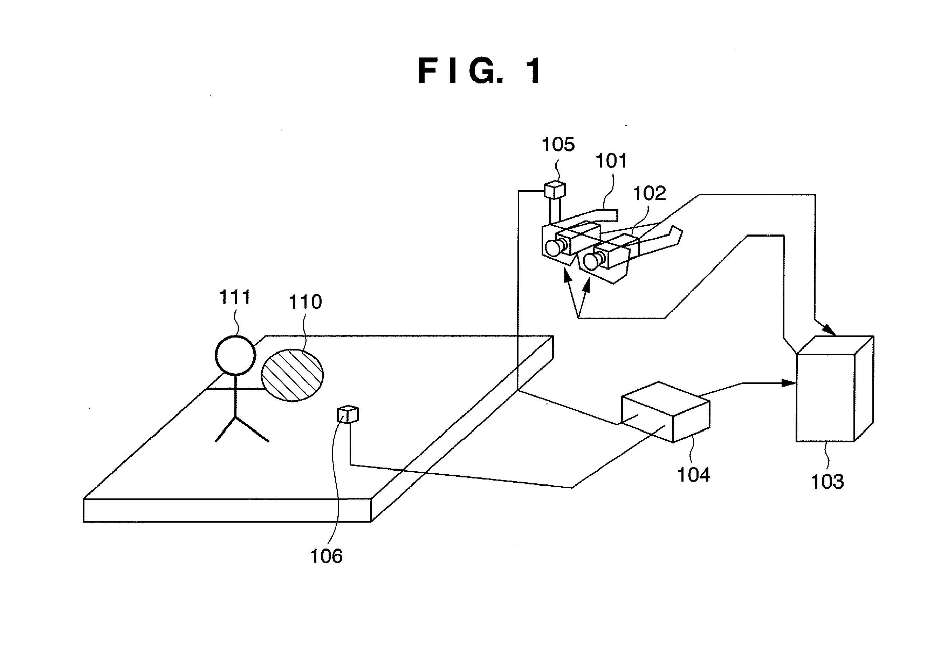

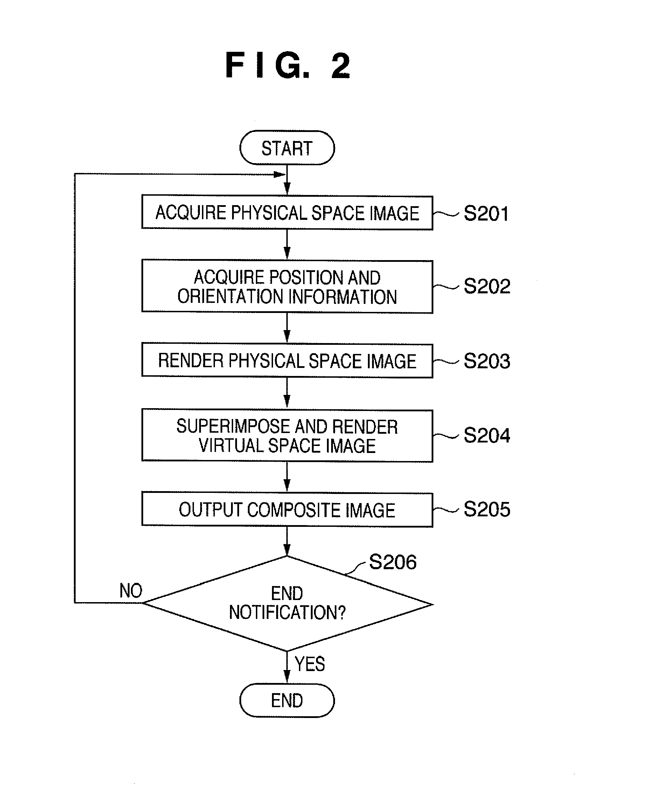

The hardware arrangement and the sequence of processing of a general mixed reality presentation apparatus (disclosed in, for example, Japanese Patent Laid-Open No. 2005-107968) will be described below with reference to Figs. 1 and 2.

In this example, by superimposing a virtual space image 110 (an image of a virtual object) onto a physical space image of a physical space object 111, a virtual object represented by the virtual space image 110 can be displayed on the physical space object 111 as if it existed in the physical space. Such function can be applied to verification of design and entertainment, for example.

In step S201, a PC (personal computer) 103 acquires a physical space image from an image capturing unit 102 incorporated in an HMD (head mounted display) 101.

In step S202, the position and orientation measurements of an HMD measurement sensor 105 fixed to the HMD 101, and those of a physical space object measurement sensor 106 fixed to the physical space object 111 are obtained. These measurement values are collected by a position and orientation measurement unit 104, and are fetched by the PC 103 as position and orientation information via a communication unit such as a serial communication or the like.

In step S203, the PC 103 renders a physical space image of the physical space object 111 in its memory.

In step S204, a virtual space image is rendered in the memory of the PC 103 according to the position and orientation measurement values of the image capturing unit 102 and those of the physical space object 111 acquired in step S202 so as to be superimposed on the physical space image. In this way, in the memory, a mixed reality image as a composite image of the physical space image and virtual space image is generated.

In step S205, the PC 103 transmits the composite image (mixed reality image) rendered in the memory of the PC 103 to the HMD 101, thereby displaying the composite image (mixed reality image) on the HMD 101.

Steps S201 to S205 described above are the processes for one frame. The PC 103 checks in step S206 if an end notification based on an operation of the operator is input. If no end notification is input (NO in step S206), the process returns to step S201.
On the other hand, if an end notification is input (YES in step S206), the processing ends.

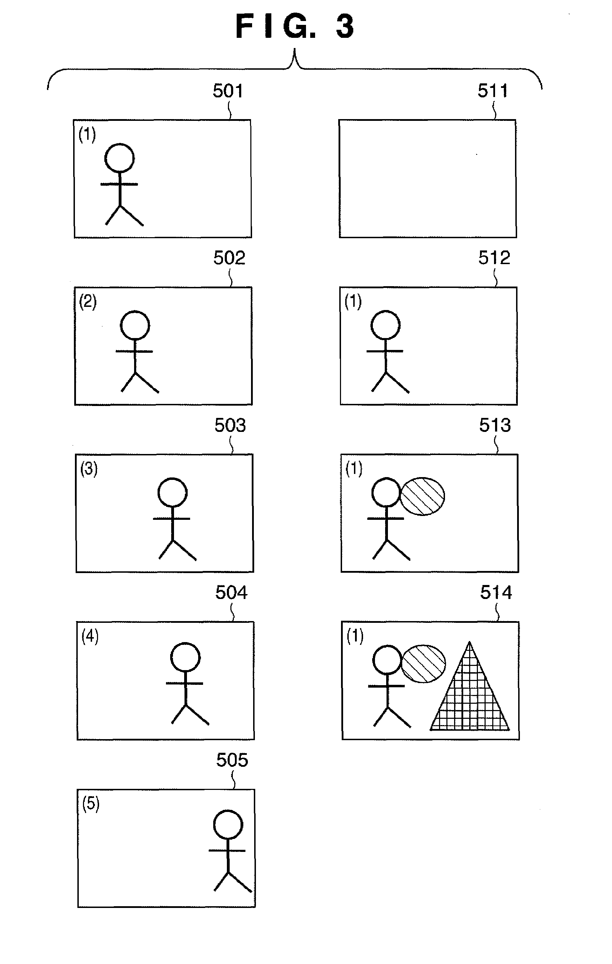

An example of the composite image obtained by the aforementioned processing will be described below with reference to Fig. 3.

Referring to Fig. 3, images 501 to 505 are obtained by time-serially arranging physical space images obtained from the image capturing unit 102. Images 511 to 514 time-serially represent the progress of the composition processing between the physical space image and virtual space image.

In this example, assume that the physical space image acquired in step S201 is the image 501. After that, time elapses during the processes of steps S202 and S203, and the physical space image changes from the image 501 to the image 502.

Examples obtained by sequentially superimposing and rendering two virtual space images on the physical space image in step S204 are the images 513 and 514.

The finally obtained image (composite image) 514 is output in step S205. At this time, the physical space image already changes to the image 504 or 505.

In the aforementioned arrangement of the general mixed reality presentation apparatus, many steps need to be executed until the physical space image acquired in step S201 is displayed on the HMD 101. In particular, the processing for superimposing and rendering the virtual space images in step S204 requires a lot of time since their rendering is implemented by high-quality CG images.

For this reason, when the composite image is displayed on the HMD 101, a physical space image in the composite image to be actually presented to the observer is temporally delayed from a physical space image at that time, as shown in Fig. 3, thus making the observer feel unnatural.

### SUMMARY OF THE INVENTION

The present invention has been made to address the aforementioned problems.

The present invention in its first aspect provides a mixed reality presentation apparatus as specified in claims 1 to 5.

The present invention in its second aspect provides a method of controlling a mixed reality presentation apparatus as specified in claim 6.

The present invention in its third aspect provides a computer program stored in a computer-readable medium as specified in claim 7.

Further features of the present invention will become apparent from the following description of exemplary embodiments with reference to the attached drawings.

### BRIEF DESCRIPTION OF THE DRAWINGS

Fig. 1 is a view showing the hardware arrangement of a known general mixed reality presentation apparatus;

Fig. 2 is a flowchart showing the processing of the known general mixed reality presentation apparatus;

Fig. 3 shows a practical example of known general image composition processing;

Fig. 4 is a block diagram showing the hardware arrangement of a PC which functions as a mixed reality presentation apparatus according to the first embodiment of the present invention;

Fig. 5 is a flowchart showing the processing to be executed by the mixed reality presentation apparatus according to the first embodiment of the present invention;

Fig. 6 shows a practical example of image composition processing according to the first embodiment of the present invention;

Fig. 7 is a flowchart showing the processing to be executed by a mixed reality presentation apparatus according to the second embodiment of the present invention;

Fig. 8 is a view for explaining a practical example of image composition according to the second embodiment of the present invention;

Fig. 9 is a flowchart showing the processing to be executed by a mixed reality presentation apparatus according to the third embodiment of the present invention; and

Fig. 10 is a flowchart showing details of position and orientation prediction of a physical space image according to the third embodiment of the present invention.

### DESCRIPTION OF THE EMBODIMENTS

Preferred embodiments of the present invention will now be described in detail with reference to the drawings. It should be noted that the relative arrangement of the components, the numerical expressions and numerical values set forth in these embodiments do not limit the scope of the present invention unless it is specifically stated otherwise.

<First Embodiment> In the first embodiment, a description will be given assuming that the intrinsic parameters of an image capturing unit (camera) that acquired a physical space image are acquired as pre-processing, and when no image adjustment processing is applied, geometrical matching between a physical space image and virtual space image is attained.

In order to accurately attain geometrical matching between the physical space image and virtual space image, the aspect ratio and distortion parameters need to be calculated and processed at the same time during adjustment processing of the physical space image. However, since this point is not essential to the present invention, a description about distortions and errors of the aspect ratio will not be given.

The image composition processing as a characteristic feature of the present invention will now be described assuming that calibration of the intrinsic parameters of an image capturing unit (camera) and that of a position and orientation measurement unit are complete.

The basic arrangement of a mixed reality presentation apparatus that implements the present invention is the same as that shown in Fig. 1, except for its internal processing.

As a position and orientation measurement system of the first embodiment, a position and orientation measurement apparatus known as FASTRAK (trade name) available from Polhemus, U.S.A. can be used. However, the position and orientation measurement can also be implemented by a method of measuring only the orientation using a measuring device such as a gyro or the like, and measuring position information and drift errors of the orientation from a captured image.

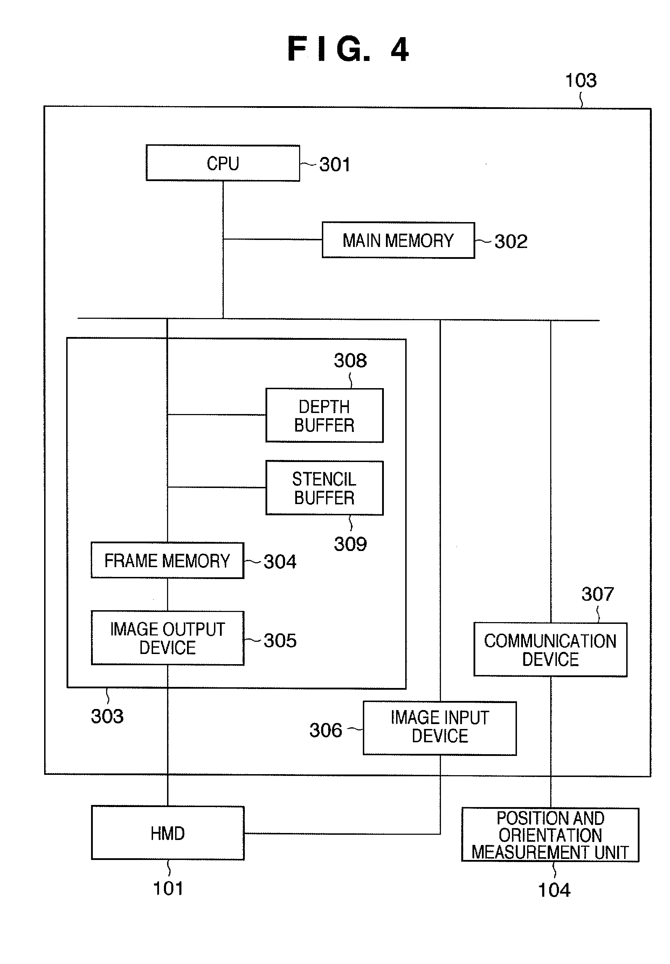

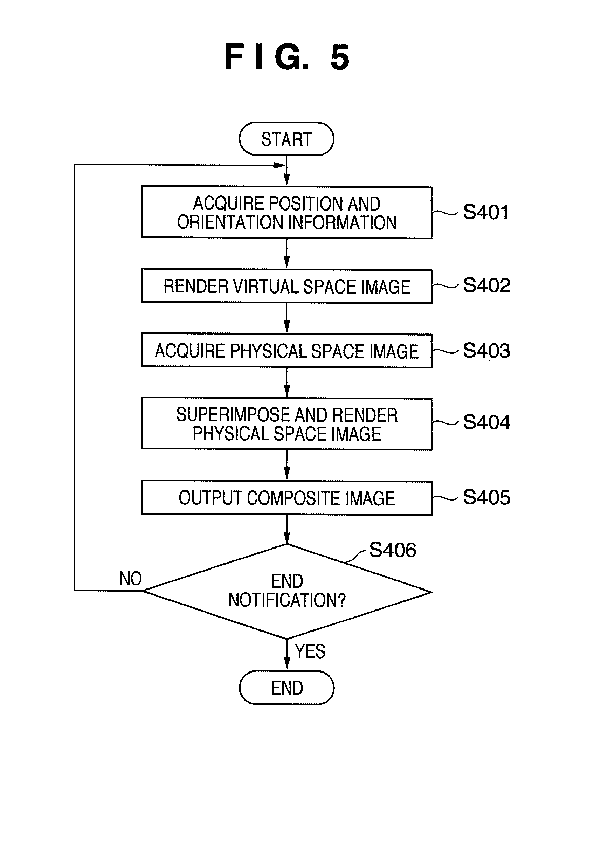

Image composition by a mixed reality presentation apparatus of the first embodiment will be described below with reference to Figs. 1, 4, and 5. Fig. 4 is a block diagram showing the hardware arrangement of a PC which functions as the mixed reality presentation apparatus according to the first embodiment of the present invention. Fig. 5 is a flowchart showing the processing to be executed by the mixed reality presentation apparatus according to the first embodiment of the present invention.

Note that the flowchart shown in Fig. 5 is implemented when, for example, a CPU 301 of the mixed reality presentation apparatus shown in Fig. 4 executes a control program stored in a main memory.

In step S401, the CPU 301 acquires position and orientation information from the position and orientation measurement values of an HMD measurement sensor 105 fixed to an HMD 101, and those of a physical space object measurement sensor 106 fixed to a physical space object 111. That is, the measurement values (position and orientation information) measured by these sensors are collected by a position and orientation measurement unit 104, which calculates position and orientation information indicating a relative position and orientation relationship between the viewpoint of the observer and a physical space object arranged in a physical space based on the two kinds of obtained position and orientation information. The position and orientation measurement unit 104 transmits the calculation results to a PC 103 via a communication unit such as a serial communication or the like.

In this way, in the PC 103, measurement data are sent to and stored in a main memory 302 via a communication device 307. As a result, the PC 103 serves as a position and orientation information acquisition unit which acquires the position and orientation information indicating the relative position and orientation relationship between the viewpoint of the observer and the physical space object on the physical space from the position and orientation measurement unit 104.

In step S402, the CPU 301 renders a virtual space image according to a predetermined coordinate system in the main memory 302 based on the already acquired position and orientation information. Normally, image composition is made by superimposing a virtual space image on a physical space image as a background. However, in the present invention, a virtual space image is rendered first.

Note that a high-resolution, high-quality virtual space image needs to be rendered depending on the mode of an application. In this case, the rendering requires a time of several frames or more of the video rate. The predetermined coordinate system is a three-dimensional coordinate system required to display the physical space image and virtual space image using a common coordinate system, and an origin required to define that coordinate system can be set as needed.

In the present invention, since the virtual space image is rendered first, a physical space image at a timing intended as an image to be composited can be prevented from being changed to that after that timing during rendering of the virtual space image in association with a physical space image used in composition.

At this time, in the PC 103, a graphics accelerator 303 renders, using the virtual space image which is stored by the CPU 301 in the main memory 302, that virtual space image on a frame memory 304. In this case, the graphics accelerator 303 simultaneously updates depth information of the virtual space image in a depth buffer 308.

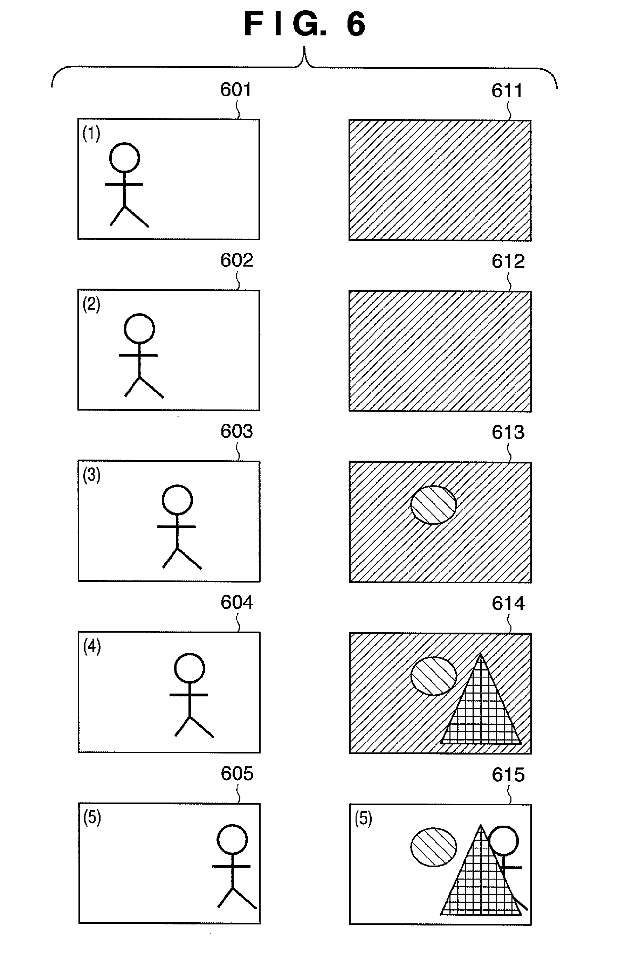

When the rendering in step S402 requires a time for about two frames, this means that the state of a physical image advances from an image 601 to an image 604 for virtual space images 613 and 614 in Fig. 6. In Fig. 6, the state of a virtual space image to be composited is represented by images 611 to 614.

In step S403, the PC 103 acquires a physical space image from an image capturing unit 102 incorporated in the HMD 101. At this time, in the PC 103, an image input device 306 converts the physical space image received from the HMD 101 into a predetermined format, and stores it in the main memory 302. In case of Fig. 6, an image 605 is acquired.

In step S404, the CPU 301 renders the acquired physical space image in the main memory 302. In the PC 103, the CPU 301 renders the physical space image in the main memory 302 in the frame memory 304. At this time, the CPU 301 controls the graphics accelerator 303 to superimpose and render the physical space image on a portion where the virtual space image is not rendered on the frame memory 304 using the depth information in the depth buffer 308. In this case, an image 615 in Fig. 6 can be obtained. In this way, the physical space image can be prevented from being overwritten on the virtual space image.

As a method of preventing a physical space image from being overwritten on a virtual space image, permission or inhibition of overwriting can also be controlled using a stencil buffer 309 that stores control information for controlling whether to permit or inhibit overwriting of an image on a virtual space image.

In step S405, the CPU 301 outputs a composite image generated in step S404 to the HMD 101 using image output device 305.

With the above processing, an observer can observe an image displayed on the HMD 101 as if a virtual object existing in the physical space were present. Also, this processing can minimize the time delay (time difference) between a physical space image at the intended timing of the observer, and that to be displayed.

As described above, steps S401 to S405 are the processes for one frame. The CPU 301 checks in step S406 if an end notification based on an operation of the observer is input. If no end notification is input (NO in step S406), the process returns to step S401. On the other hand, if an end notification is input (YES in step S406), the processing ends.

As described above, according to the first embodiment, after a virtual space image is rendered, a physical space image to be composited intended by the user is acquired, and is superimposed and rendered on that virtual space image, thereby generating a composite image. In this way, a difference in the contents of a physical space image due to a delay of an image output time as a result of image processing can be minimized, and a composite image having the contents of a physical space image at a timing intended by the user can be presented.

<Second Embodiment>
The second embodiment will explain an application example of the first embodiment. In a mixed reality presentation apparatus, displaying a translucent output image is often effective to improve the visibility of the observer. Hence, the second embodiment will explain an arrangement that implements such translucent display.

Note that the arrangement of a mixed reality presentation apparatus of the second embodiment can be implemented using the apparatus described in the first embodiment, and a detailed description thereof will not be repeated.

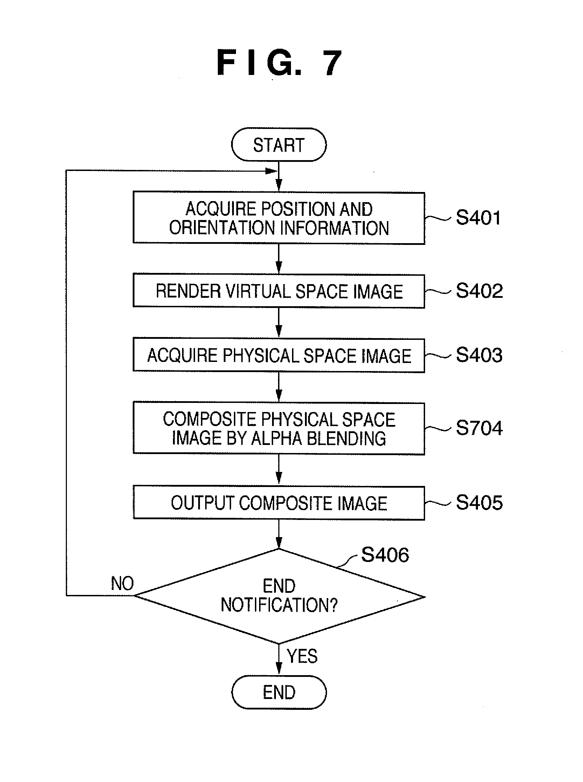

The image composition processing by the mixed reality presentation apparatus of the second embodiment will be described below with reference to Fig. 7.

Fig. 7 is a flowchart showing the processing executed by the mixed reality presentation apparatus of the second embodiment.

Note that the same step numbers in Fig. 7 denote the same processes as those in Fig. 5 of the first embodiment, and a detailed description thereof will not be repeated.

Referring to Fig. 7, after the process in step S403, a CPU 301 controls a graphics accelerator 303 to composite a physical space image by alpha blending in step 704.

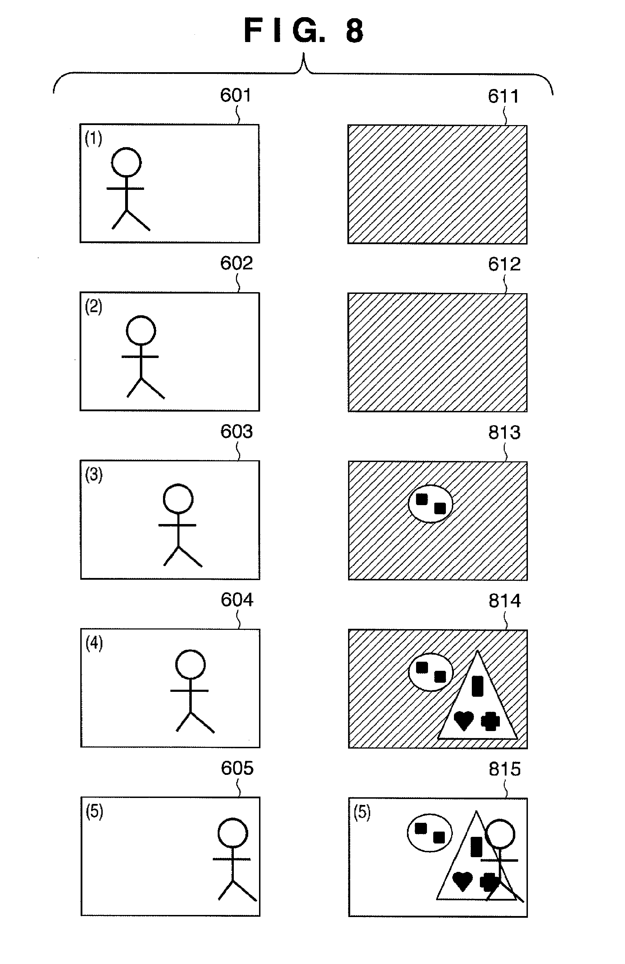

Fig. 8 shows a practical processing example according to the second embodiment of the present invention.

Note that the same reference numerals in Fig. 8 denote images common to Fig. 6 of the first embodiment.

In Fig. 8, virtual space images 813 and 814 are rendered to have a black background. By compositing an image 605 of a physical space image onto the virtual space image 814 using alpha blending processing such as addition or the like, a translucent effect can be obtained. As a result, a translucent-processed composite image 815 can be obtained.

Note that the composite image 815 is expressed in black and white in Fig. 8. However, in practice, translucent composition can be implemented.

As described above, according to the second embodiment, a translucent output image can be displayed as needed in addition to the effects described in the first embodiment.

<Third Embodiment>
The third embodiment is an application example of the first embodiment. The first and second embodiments have explained the arrangement that reduces a time delay between the state of a physical space image at the current timing observed by the observer, and that of a physical image finally output to the HMD 101. In this arrangement, position and orientation information which is required to generate a virtual space image and is acquired in step S401 may produce a time delay with respect to the position and orientation of an actual physical space object 111 upon acquisition of the physical space image. Hence, the third embodiment will explain image composition processing for reducing the time delay of the acquired position and orientation information.

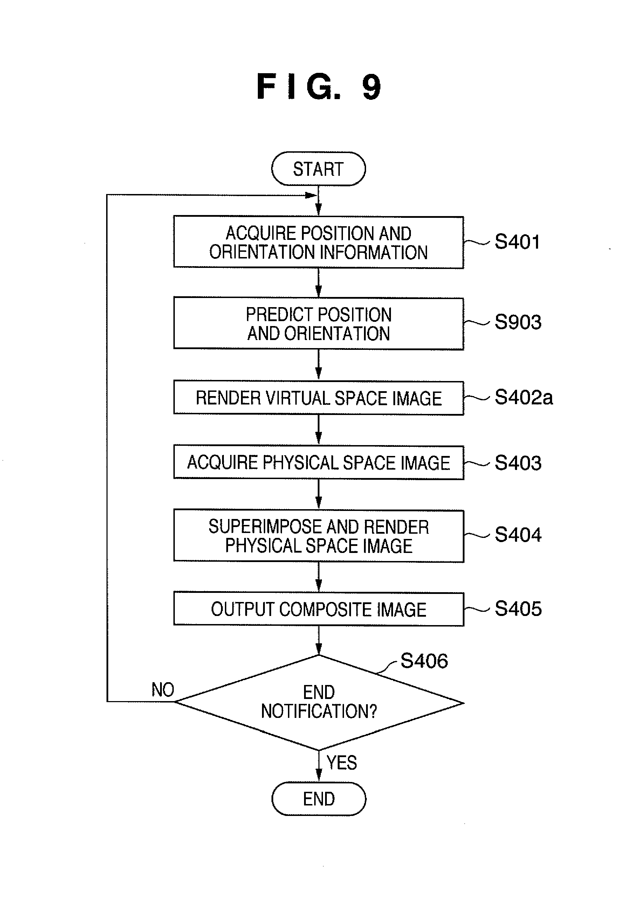

The image composition processing by a mixed reality presentation apparatus according to the third embodiment will be described below with reference to Fig. 9.

Fig. 9 is a flowchart showing the processing executed by the mixed reality presentation apparatus according to the third embodiment.

Note that the same step numbers in Fig. 9 denote the same processes as those in Fig. 5 of the first embodiment, and a detailed description thereof will not be repeated.

Particularly, in Fig. 9, a CPU 301 executes the position and orientation prediction of a physical space image in step S903 after the process in step S401 in Fig. 5 of the first embodiment. In step S402a, the CPU 301 renders a virtual space image in a main memory 302 based on the predicted values (position and orientation information) obtained in step S903.

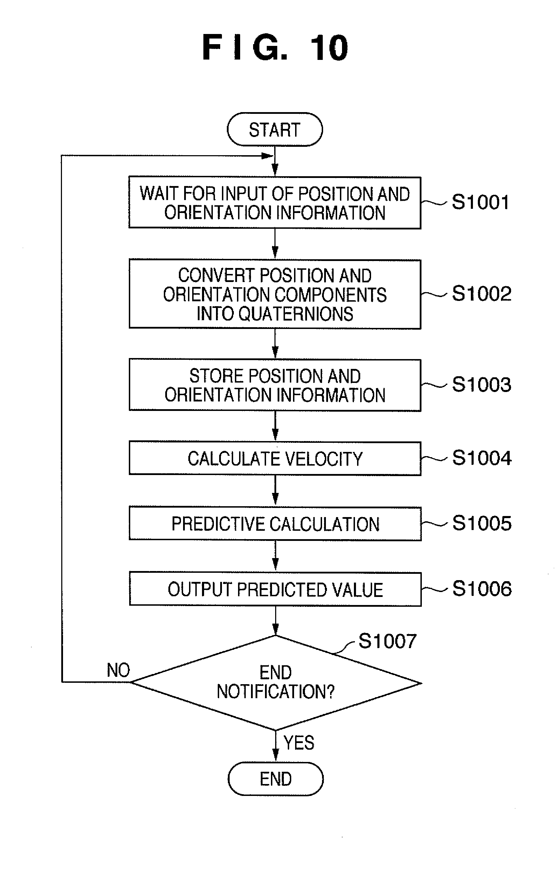

Details of this processing will be described below with reference to Fig. 10.

Fig. 10 is a flowchart showing details of the position and orientation prediction of a physical space image according to the third embodiment of the present invention.

In step S1001, the CPU 301 acquires position and orientation information. In step S1002, the CPU 301 converts position and orientation components in the position and orientation information into quaternions. As is generally known, it is effective to convert position and orientation components into quaternions so as to attain predictive calculations such as linear prediction of position and orientation information or the like. However, the predictive calculation method is not limited to that using linear prediction. That is, any other methods may be used as long as they can attain predictive calculations.

In step S1003, the CPU 301 stores, in the main memory 302, the value indicating the position component, and the values indicating the position and orientation components converted into the quaternions in step S1002. Assume that pieces of position and orientation information corresponding to two previous frames (the values indicating the position components, and the position and orientation components) are stored in step S1003. When more accurate prediction that suffers less noise is required, it is effective to store pieces of position and orientation information corresponding to three or more frames (the values indicating the positions, and the positions and orientations). The number of frames to be stored may be set according to use applications and purposes, and it is not particularly limited.

In step S1004, the CPU 301 calculates the velocity of a physical space object based on the pieces of position and orientation information for two frames (the values indicating the positions, and the positions and orientations). Given, for example, uniform velocity movement, uniform rotation, or the like, the predicted value of the velocity can be easily calculated by linear prediction based on the pieces of position and orientation information for two frames (the values indicating the positions, and the positions and orientations).

In step S1005, the CPU 301 executes predictive calculations for calculating the predicted values of the position and orientation of the physical space object based on the calculated velocity. As this predictive calculation method, various methods are known as a method of estimating a predicted value by applying to a specific predictive calculation model, and the predictive calculation methods used in the present invention are not particularly limited.

In step S1006, the CPU 301 outputs the calculated predicted values. The CPU 301 checks in step S1007 if an end notification of the processing from a PC 103 is input. If no end notification is input (NO in step S1007), the process returns to step S1001. On the other hand, if an end notification is input (YES in step S1007), the processing ends.

By rendering a virtual space image using the predicted values obtained by the aforementioned processing method, image composition using a virtual space image which has a minimum time delay from the state upon acquisition of a physical space image even upon compositing to the physical space image later can be implemented.

As described above, according to the third embodiment, a virtual space image is rendered based on the predicted values indicating the position and orientation at the acquisition timing of a physical space image. As a result, a virtual space image and physical space image close to the state (the position and the position and orientation) upon acquisition of the physical image can be composited.

Note that the present invention can be applied to an apparatus comprising a single device or to system constituted by a plurality of devices.

Furthermore, the invention can be implemented by supplying a software program, which implements the functions of the foregoing embodiments, directly or indirectly, to a system or apparatus, reading the supplied program code with a computer of the system or apparatus, and then executing the program code. In this case, so long as the system or apparatus has the functions of the program, the mode of implementation need not rely upon a program.

Accordingly, since the functions of the present invention are implemented by computer, the program code installed in the computer also implements the present invention. In other words, the claims of the present invention also cover a computer program for the purpose of implementing the functions of the present invention.

In this case, so long as the system or apparatus has the functions of the program, the program may be executed in any form, such as an object code, a program executed by an interpreter, or script data supplied to an operating system.

Example of storage media that can be used for supplying the program are a floppy disk, a hard disk, an optical disk, a magneto-optical disk, a CD-ROM, a CD-R, a CD-RW, a magnetic tape, a non-volatile type memory card, a ROM, and a DVD (DVD-ROM and a DVD-R.

As for the method of supplying the program, a client computer can be connected to a website on the Internet using a browser of the client computer, and the computer program of the present invention or an automatically-installable compressed file of the program can be downloaded to a recording medium such as a hard disk. Further, the program of the present invention can be supplied by dividing the program code constituting the program into a plurality of files and downloading the files from different websites. In other words, a WWW (World Wide Web) server that downloads, to multiple users, the program files that implement the functions of the present invention by computer is also covered by the claims of the present invention.

It is also possible to encrypt and store the program of the present invention on a storage medium such as a CD-ROM, distribute the storage medium to users, allow users who meet certain requirements to download decryption key information from a website via the Internet, and allow these users to decrypt the encrypted program by using the key information, whereby the program is installed in the user computer.

Besides the cases where the aforementioned functions according to the embodiments are implemented by executing the read program by computer, an operating system or the like running on the computer may perform all or a part of the actual processing so that the functions of the foregoing embodiments can be implemented by this processing.

Furthermore, after the program read from the storage medium is written to a function expansion board inserted into the computer or to a memory provided in a function expansion unit connected to the computer, a CPU or the like mounted on the function expansion board or function expansion unit performs all or a part of the actual processing so that the functions of the foregoing embodiments can be implemented by this processing.

While the present invention has been described with reference to exemplary embodiments, it is to be understood that the invention is not limited to the disclosed exemplary embodiments. The scope of the following claims is to be accorded the broadest interpretation so as to encompass all such modifications and equivalent structures and functions.

## Claims

1. A mixed reality presentation apparatus for compositing a physical space image and a virtual space image, and presenting a composite image, comprising:
position and orientation information acquisition means (103) configured to acquire position and orientation information indicating a relative position and orientation relationship between a viewpoint of an observer and a physical space object in a physical space;
rendering means (301) configured to generate a virtual space image based on the position and orientation information acquired by said position and orientation information acquisition means, and to render the generated virtual space image in a memory (304);
acquisition means (306) configured to acquire a physical space image of the physical space object;
composition means (303) configured to combine the physical space image and the generated virtual space image by rendering the physical space image acquired by said acquisition means in the memory in which the virtual space image has already been rendered; and
output means (305) configured to output the composite image obtained by said composition means.

2. The apparatus according to claim 1, further comprising a depth buffer (308) for storing depth information of the virtual space image,
wherein said composition means combines the physical space image and the virtual space image by rendering the physical space image in a portion of the memory where the virtual space image is not rendered using the depth information stored in said depth buffer.

3. The apparatus according to claim 1, further comprising a stencil buffer (309) for storing control information used to control whether to permit or inhibit overwriting of an image in the virtual space image,
wherein said composition means combines the physical space image and the virtual space image by rendering the physical space image so as to prevent the virtual space image in the memory from being overwritten by the physical space image using the control information stored in said stencil buffer.

4. The apparatus according any preceding claim, **characterized in that** said composition means combines the physical space image and the virtual space image by alpha blending.

5. The apparatus according to any preceding claim, further comprising prediction means (301) configured to predict position and orientation information used for rendering of the virtual space image by said rendering means based on the position and orientation information acquired by said position and orientation information acquisition means.

6. A method of controlling a mixed reality presentation apparatus for compositing a physical space image and a virtual space image, and presenting a composite image, comprising:
acquiring position and orientation information indicating a relative position and orientation relationship between a viewpoint of an observer and a physical space object in a physical space;
generating a virtual space image based on the position and orientation information acquired in the position and orientation information acquisition step, and rendering the generated virtual space image in a memory;
acquiring a physical space image of the physical space object;
compositing the physical space image and the virtual space image by rendering the physical space image acquired in the acquisition step in the memory in which the virtual space image has already been rendered; and
outputting the composite image obtained in the composition step.

7. A computer program which when loaded into a computer and executed configures the computer to function as a mixed reality presentation apparatus as claimed in any one of claims 1 to 5.

8. A machine-readable storage means storing a computer program as claimed in claim 7.
